# FASCICULE DE BREVET EUROPEEN

(11) **EP 1 022 915 B1**
(45) Date de publication et mention de la délivrance du brevet: **05.10.2011**
(21) Numéro de dépôt: 00400164.0
(22) Date de dépôt: 21.01.2000
(51) Int. Cl.: H04H 60/09, H04H 60/91

(54) **Appareil de radiotéléphonie cellulaire comportant un récepteur de diffusion hertzienne**
MOBILTELEFON MIT EINEM RUNDFUNKEMPFÄNGER
MOBILE TELEPHONE COMPRISING A BROADCASTING RECEIVER

(30) Priorité: 22.01.1999 FR 9900695; 12.08.1999 FR 9910436
(43) Date de publication de la demande: 26.07.2000
(73) Titulaire: Sagem Mobiles, 75015 Paris (FR)
(72) Inventeur: Heurtaux, Frédéric, 13610 Le Puy Sainte Reparade (FR)
(74) Mandataire: Lavé, Stéphanie

(56) Documents cités:
- EP-A- 0 731 572
- WO-A-97/12452
- WO-A1-97/28662

## Description

L'utilisateur d'un appareil de réception de signaux d'informations radiodiffusées, tels que des programmes radio ou des programmes de télévision, doit gérer lui-même l'appareil, en ce sens qu'il doit le régler sur la fréquence de l'émetteur local du réseau de diffusion des programmes qu'il choisit et par ailleurs le mettre sous tension lorsqu'arrive l'heure de début d'un programme qui l'intéresse.

Si l'on prend l'exemple d'un récepteur mobile de programmes radio, intégré au tableau de bord d'un véhicule ou porté par son utilisateur, il se peut que ce dernier doive changer la fréquence de réception du récepteur à chaque fois qu'il entre dans la zone radio d'un nouvel émetteur. Il doit donc se procurer des tables des fréquences des diverses stations ou réseaux de radiodiffusion, ce qui est une contrainte et peut mettre en péril cet utilisateur s'il est en train de conduire. Il peut aussi arriver que l'utilisateur oublie d'activer son récepteur à l'heure voulue.

Le document EP 0 731 572 décrit un mécanisme permettant à un utilisateur dans un véhicule de recevoir des programmes radio correspondant à un genre (par exemple musique rock, musique classique ou match de baseball) qu'il a préalablement sélectionné. Une station de base reçoit une requête comprenant le genre de programme désiré par l'utilisateur. Elle sélectionne ensuite dans une base de données, en fonction de la localisation du véhicule, une station de radio pouvant correspondre au genre de programme désiré par l'utilisateur. Elle transmet ensuite au récepteur radio de l'utilisateur une information de fréquence correspondant à la station radio sélectionnée, ce qui entraîne que le récepteur radio s'accorde sur la fréquence de la station sélectionnée par la station de base.

Le document JP 04 343532 décrit un téléphone portable doté d'une fonction de communication sans-fil avec une station de base et d'une fonction de réception de diffusion hertzienne. Le téléphone portable comporte en outre un commutateur permettant de sélectionner soit la fonction de communication sans-fil, soit la fonction de réception de diffusion hertzienne.

La présente invention vise à alléger la tâche de gestion de la réception des signaux diffusés par voie hertzienne.

A cet effet, l'invention concerne un appareil de radiotéléphonie cellulaire comportant des moyens de réception de diffusion hertzienne, des moyens de réception de radiotéléphonie, qui comprennent des moyens de réception de données, et des moyens commandés par les moyens de réception de données pour contrôler les moyens de réception de diffusion hertzienne.

Ainsi, se trouvent regroupés fonctionnellement un récepteur radio de diffusion hertzienne et des moyens de radiotéléphonie qui permettent de recevoir, par le réseau radiotéléphonique, des données de télécommande du récepteur radio, ce qui allège d'autant la tâche de l'utilisateur.

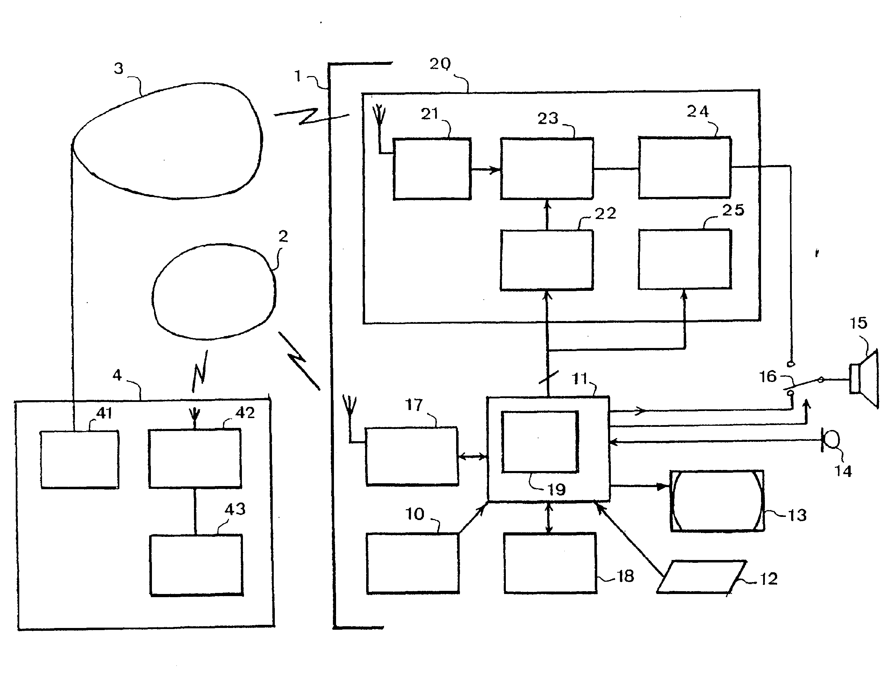

L'invention sera mieux comprise à l'aide de la description suivante d'une forme de réalisation préférée de l'appareil de radiotéléphonie cellulaire de l'invention, en référence à la figure unique qui représente schématiquement cet appareil ainsi qu'une station de diffusion d'informations radio, reliés l'un à l'autre par un réseau radio de diffusion des informations et par un réseau de radiotéléphonie, ici le réseau GSM.

L'appareil référencé 1 est un terminal, ici mobile et portable, qui comporte un récepteur 20 d'informations diffusées par un réseau 3 de diffusion hertzienne et comporte en outre les circuits téléphoniques d'un combiné de radiotéléphonie cellulaire GSM, pouvant se relier au réseau GSM 2.

Les informations diffusées proviennent d'une station 4 de production de programmes radio reliée en sortie, ici par câble, à une station tête de réseau (non représentée) du réseau de diffusion 3 pour en commander l'émetteur et des répéteurs, ou réémetteurs, qui couvrent un territoire étendu dans lequel s'étend le réseau GSM 2.

Le terminal 1 comporte une base de temps 10 rythmant le fonctionnement d'une unité centrale à microprocesseur 11 reliée à l'ensemble des divers circuits du terminal 1, pour les gérer. Un clavier 12 et un afficheur 13 sont reliés à l'unité centrale 11, de même qu'un microphone 14 et un haut-parleur 15, ce dernier à travers un contact d'un relais 16 à deux positions commandé par l'unité centrale 11. L'unité centrale 11 est reliée au réseau GSM 2 par un circuit radio 17, qui assure entre autres la mise en paquets des données numériques de signal vocal à l'émission, et convertit les paquets de signal vocal reçus en un flux de données pour les restituer par le haut-parleur 15 après conversion numérique/analogique dans l'unité centrale 11. A cette dernière est associé un bloc 18 de réception de données pour gérer le service des messages courts du réseau GSM 2, le bloc 18 pouvant recevoir et gérer des messages courts pouvant au choix être du type point-à-point, SMS, ou à diffusion commune dans une cellule (SMS-CB). On rappellera que ce service permet de transmettre des paquets de données, entre abonnés du réseau GSM 2, ou depuis une source externe au réseau GSM, par exemple depuis un terminal de la marque protégée Minitel à travers un serveur dédié ou par courrier électronique par l'Internet via une passerelle spécialisée. Cette transmission s'effectue à travers des canaux de signalisation ou de données et ceci automatiquement, sans nécessiter que le terminal GSM appelé réponde à l'appel.

Le récepteur radio 20, relié en entrée au réseau de diffusion 3, comporte, très schématiquement, un étage amplificateur d'entrée 21 suivi d'un étage mélangeur 23 de transposition de fréquence commandé par un oscillateur local d'un circuit 22 de réglage de fréquence de réception dont une entrée de réglage est reliée à une sortie de l'unité centrale 11. La sortie du mélangeur 23 est appliquée à un circuit 24 qui effectue un filtrage passe bande, une amplification et une adaptation d'impédance en sortie, pour présenter une faible impédance sensiblement égale à celle du haut-parleur 15. La lame du relais 16 pivote autour d'un axe relié électriquement au haut-parleur 15 pour, dans une position, relier celui-ci à l'unité centrale 11, et donc au circuit radio 17, et, dans l'autre position, relier le haut-parleur 15 à la sortie du circuit 24. Le récepteur 20 comporte en outre un circuit 25 de réception et d'exécution d'ordres de l'unité centrale 11, relié à une sortie de celle-ci. Le circuit 22 représente un cas particulier de circuit 25, pour des ordres de réglage de fréquence.

La station 4, outre la production de programmes radio et leur envoi sur le réseau de diffusion 3 par des circuits 41, assure aussi un service d'émission de messages courts SMS, à travers le réseau GSM 2. Pour l'envoi de messages SMS point-à-point, la station 4 est reliée à des circuits radio 42 qui sont l'équivalent d'un combiné GSM et permettent l'émission des SMS point-à-point. Pour une liaison de données, correspondant à un cas général, par exemple une liaison spécialisée ou une liaison par l'Internet, les circuits radio 42 permettent en outre de transmettre des messages à diffusion SMS-CB par l'intermédiaire du service SMS-CB du réseau GSM 2. Les circuits 42 sont reliés par ailleurs à des circuits 43 de gestion d'appareils comme le terminal 1.

Le fonctionnement des réseaux 2, 3, du terminal 1 et de la station 4 et de sources externes va maintenant être expliqué.

Dans la partie récepteur radio 20 du terminal 1, le circuit oscillateur 22 et le circuit 25 constituent des récepteurs de télécommandes de la station 4, émises dans des messages courts SMS sur le réseau GSM 2, par les circuits de gestion 43 à travers les circuits radio 42 de transmission, à destination du terminal 1 (en pratique vers une pluralité de tels terminaux). Le circuit radio 17 qui les reçoit les retransmet, à travers ici l'unité centrale 11, au circuit de gestion SMS 18, qui met les signaux de télécommande, du message SMS reçu, sous la forme voulue pour les transmettre aux circuits 22, 25. Le circuit radio 17 fonctionne dans cette phase de télécommande en récepteur radio de données sous forme de messages courts SMS et forme en fait alors une seule entité fonctionnelle avec le bloc de réception 18. Le bloc de réception 18 commande ensuite l'unité centrale 11 pour qu'elle transmettre les signaux de télécommande aux circuits 22 et 25 et ainsi contrôle ces derniers.

Les messages SMS sont émis par la station 4 à destination de terminaux comme celui référencé 1 pour indiquer, dans chaque zone couverte par un réémetteur spécifique du réseau de diffusion 3, la fréquence du réémetteur considéré. Lorsque les télécommandes sont liées à la prise en compte de la position géographique du terminal 1, pour par exemple régler la fréquence du récepteur 20, le terminal 1 peut fournir sa position aux circuits de gestion 43. Le terminal 1 peut aussi reconnaître, par sa position, quelles commandes il doit prendre en compte dans le flux de données reçues par SMS. Comme le réseau GSM 2 assure lui-même un suivi des déplacements du terminal 1, il peut être prévu que ce soit un centre d'exploitation du réseau GSM 2 qui fournisse ces informations aux circuits 43, ou au réseau GSM lui-même lorsqu'il émet les SMS, pour que celui-ci déclenche automatiquement l'envoi des télécommandes appropriées. Lorsque le terminal 1 entre dans une nouvelle zone de réémetteur, son oscillateur local 22 est télécommandé par un message SMS, initialisé par la station 4, pour s'accorder sur la fréquence du réémetteur considéré, fournie sous forme de données dans le message SMS. Comme évoqué plus haut, le circuit de gestion 18 assure ici une adaptation des données de fréquence reçues dans le message SMS pour les convertir en une valeur numérique appropriée, si l'oscillateur du circuit 22 est programmable, ou en une valeur analogique de commande de l'oscillateur du circuit 22 s'il s'agit d'un VCO (oscillateur à commande en tension).

Le circuit 25 peut recevoir de même des télécommandes provenant de la station 4, ou de sources externes via le réseau GSM 2, sous forme de messages courts SMS à travers les circuits 17, 11, 18. Le circuit 25 peut par exemple recevoir une commande de mise en service, ou d'activation, (ou bien de désactivation) du récepteur 20 et commander alors un interrupteur d'alimentation de celui-ci. En variante, le circuit 25 ou l'unité centrale 11 peuvent simplement avertir l'utilisateur de l'arrivée d'un message SMS par une tonalité du haut-parleur 15 ou par affichage d'un message d'avertissement sur l'afficheur 13 sur lequel peut aussi être affiché le message SMS reçu. En pareil cas, l'utilisateur se trouve dans la chaîne de télécommande allant de la source du SMS à l'organe commandé du récepteur 20.

En pratique, l'utilisateur du terminal 1 aura préalablement téléphoné à la station 4 ou prévenu la source externe pour requérir qu'elle exécute une telle action de télécommande, c'est-à-dire qu'il aura mémorisé dans les circuits de gestion 43, ou des circuits équivalents externes, une liste de programmes sélectionnés dont la diffusion est prévue, définis par leur nom ou par leur date et heure de début et de fin. Une telle requête, depuis le clavier 12, peut être transmise automatiquement par messages courts SMS, du circuit radio 17 du terminal 1 jusqu'aux circuits 43 de la station 4 ou aux sources externes, donc par simple transmission de données et sans devoir faire appel à un opérateur quelconque. Les circuits 43 ou les circuits équivalents comparent alors l'heure courante à celle de début du premier des programmes sélectionnés et émettant la télécommande voulue quelques minutes avant l'heure de début de programme.

Pour l'adaptation des données de télécommande reçues, il est ici prévu, dans l'unité centrale 11 du terminal 1, une mémoire de données 19 adressée par le bloc de réception 18 au moyen des données SMS provenant du circuit 17, mémoire 19 constituant une table de transcodage fournissant la valeur de la fréquence d'un réémetteur du réseau 3 à partir de données désignant ce réémetteur, comme son nom, sa position géographique, émises par la source du SMS. La mémoire 19 contient en fait les plans de fréquences des émetteurs et réémetteurs d'une pluralité de stations radio.

Le terminal 1 peut aussi être prévu pour recevoir des informations autres que des programmes radio ou même télévision, par exemple des données relatives à la circulation routière dans la zone où il se trouve.

## Revendications

1. Appareil de radiotéléphonie cellulaire (1) comportant des moyens (20) de réception de diffusion hertzienne destinés à recevoir un programme sélectionné par un utilisateur dudit appareil et dont la diffusion est effectuée par des réémetteurs couvrant des zones géographiques respectives, l'appareil de radiotéléphonie cellulaire comportant en outre des moyens (17, 18) de réception de radiotéléphonie, lesdits moyens de réception de radiotéléphonie comportant des moyens (18) de réception de données,
**caractérisé en ce que**, ledit appareil étant dans une position géographique, lesdits moyens de réception de données comportent en outre des moyens de réception d'une indication de la fréquence du réémetteur dont la zone géographique couverte correspond à la position géographique dudit appareil,
et **en ce que** ledit appareil comporte en outre des moyens de contrôle (11) commandés par les moyens de réception de données (18) pour accorder les moyens (20) de réception de diffusion hertzienne sur la fréquence dudit réémetteur.

2. Appareil selon la revendication 1, dans lequel il est prévu une mémoire de données (19) agencée pour être adressée par les moyens de réception de données (18) et pour commander lesdits moyens (11) de contrôle des moyens (20) de réception de diffusion hertzienne.

3. Appareil selon l'une des revendications 1 et 2, dans lequel les moyens de réception de données (18) sont agencés pour commander la fréquence des moyens (20) de réception de diffusion hertzienne.

4. Appareil selon l'une des revendications 1 à 3, dans lequel les moyens de réception de données (18) sont agencés pour commander la mise en service des moyens (20) de réception de diffusion hertzienne.

5. Appareil selon l'une des revendications 1 à 4, dans lequel les moyens de réception de données (18) sont des moyens de service de réception de messages courts SMS.

6. Appareil selon la revendication 5, dans lequel les moyens de réception de données (18) sont agencés pour recevoir des messages courts à diffusion par cellule (SMS-CB).

7. Procédé mis en oeuvre par un appareil de radiotéléphonie cellulaire (1) effectuant des étapes de :
- réception de diffusion hertzienne d'un programme sélectionné par un utilisateur dudit appareil, la diffusion dudit programme étant effectuée par des réémetteurs couvrant des zones géographiques respectives,
- réception de données par des moyens (17, 18) de réception de radiotéléphonie dudit appareil,
**caractérisé en ce que**, ledit appareil étant dans une position géographique, le procédé comporte des étapes de :
- réception d'une indication de la fréquence du réémetteur dont la zone géographique couverte correspond à la position géographique dudit appareil,
- commande, en fonction de données reçues par lesdits moyens de réception de radiotéléphonie, pour accorder la réception de diffusion hertzienne sur la fréquence dudit réémetteur.

## Claims

1. Cellular radiotelephony device (1) comprising terrestrial broadcasting reception means (20) intended to receive a programme selected by a user of the said device and the diffusion of which is carried out by rebroadcasting transmitters covering respective geographical areas, the cellular radiotelephone device also comprising radiotelephony reception means (17, 18), the said radiotelephony reception means comprising data reception means (18),
**characterised in that**, the said device being in a geographical position, the said data reception means also comprise means of receiving an indication of the frequency of the rebroadcasting transmitter, of which the geographical area covered corresponds to the geographical position of the said device
and **in that** the said device also comprises monitoring means (11) controlled by the data reception means (18) to tune the terrestrial broadcasting reception means (20) in on the frequency of the said rebroadcasting transmitter.

2. Device according to claim 1, in which is provided a data store (19) arranged to be addressed by the data reception means (18) and to control the said means (11) of monitoring the terrestrial broadcasting reception means (20).

3. Device according to either of claims 1 or 2, in which the data reception means (18) are arranged to control the frequency of the terrestrial broadcasting reception means (20).

4. Device according to one of claims 1 to 3, in which the data reception means (18) are arranged to control the putting into service of the terrestrial broadcasting reception means (20).

5. Device according to one of claims 1 to 4, in which the data reception means (18) are SMS short message reception service means.

6. Device according to claim 5, in which the data reception means (18) are arranged to receive short message service-cell broadcast (SMS-CB) messages.

7. Method used by a cellular radiotelephony device (1) carrying out stages of:
- terrestrial broadcasting reception of a programme selected by a user of the said device, the diffusion of the said programme being carried out by rebroadcasting transmitters covering respective geographical areas,
- data reception by radiotelephony reception means (17, 18) of the said device,
**characterised in that**, the said device being in a geographical position, the method comprises the stages of:
- receiving an indication of the frequency of the rebroadcasting transmitter, of which the geographical area covered corresponds to the geographical position of the said device,
- controlling, depending on data received by the said radiotelephony reception means, to tune the terrestrial broadcasting reception in on the frequency of the said rebroadcasting transmitter.

## Patentansprüche

1. Mobilfunkgerät (1) umfassend Mittel (20) zum Radiowellensmpfang, die dazu bestimmt sind, ein durch einen Anwender dieses Geräts ausgewähltes Programm zu empfangen, und dessen Senden durch die jeweiligen geographischen Zonen abdeckende Umsetzer bewerkstelligt wird, wobei das Mobilfunkgerät außerdem Mittel (17, 18) zum Funkempfang aufweist und diese Mittel zum Funkempfang Mittel (18) zum Datenempfang aufweisen, **dadurch gekennzeichnet, dass** sich das Gerät in einer geographischen Position befindet, diese Mittel zum Datenempfang außerdem Mittel zum Empfang einer Frequenzanzeige des Umsetzers umfassen, dessen von ihm abgedeckte geographische Zone der geographischen Zone des Geräts entspricht,
und **dadurch**, dass dieses Gerät außerdem Kontrollmittel (11) umfasst, die durch die Mittel (18) zum Datenempfang gesteuert werden, um die Mittel (20) zum Radiowellenempfang auf die Frequenz dieses Umsetzers abzustimmen.

2. Gerät gemäß Anspruch 1, bei dem ein Datenspeicher (19) vorgesehen ist, der dazu ausgelegt ist, durch die Mittel (18) zum Datenempfang adressiert zu werden und die Kontrollmittel (11) der Mittel (20) zum Radiowellenempfang zu steuern

3. Gerät gemäß einem der Ansprüche 1 und 2, bei dem die Mittel (18) zum Datenempfang zum Steuern der Frequenz der Mittel (20) zum Radiowellenempfang ausgelegt sind.

4. Gerät gemäß einem der Ansprüche 1 bis 3, bei dem die Mittel (18) zum Datenempfang zum Steuern des Betriebs der Mittel (20) zum Radiowellenempfang ausgelegt sind.

5. Gerät gemäß einem der Ansprüche 1 bis 4, bei dem die Mittel (18) zum Datenempfang Mittel zum Betreiben des Empfangs von Kurzmitteilungen (SMS) sind.

6. Gerät gemäß Anspruch 5, bei dem die Mittel (18) zum Datenempfang zum Empfangen in einer Zelle versandter Kurzmitteilungen (SMS-CB) sind.

7. Verfahren ausgeführt durch ein Mobilfunkgerät (1), wobei die folgenden Schritte durchgeführt werden:
- Radioempfang eines durch einen Anwender dieses Geräts ausgewählten Programms, wobei das Senden dieses Programmes durch Umsetzer bewerkstelligt wird, die die jeweilige geographischen Zonen abdecken,
- Datenempfang durch Mittel (17, 18) zum Empfang durch Funktelefonie des Geräts, **dadurch gekennzeichnet, dass** das Gerät eine geographische Postition auftweist, wobei das Verfahren folgende Schritte umfasst:
- Empfang einer Frequenzanzeige des Umsetzers, dessen von ihm abgedeckte geographische Zone der geographischen Position dieses Geräts entspricht, und
- Steuerung als Funktion der durch diese Mittel zum Funktelefonieempfang empfangenden Daten zum Abstimmen des Radiwellenempfangs auf die Frequenz dieses Umsetzers.
